# EUROPEAN PATENT APPLICATION

(11) **EP 4 510 578 A1**
(43) Date of publication of application: **19.02.2025**
(21) Application number: 23191504.2
(22) Date of filing: 15.08.2023
(51) Int. Cl.: H04N 19/426, H04N 19/124, H04N 19/156, H04N 19/157, H04N 19/66

(54) **SYSTEMS, METHODS, AND NON-TRANSITORY COMPUTER-READABLE MEDIA FOR TRANSFORMING RAW IMAGE DATA INTO A VIDEO STREAM COMPRISING A PLURALITY OF ENCODED IMAGE FRAMES**

(71) Applicant: Axis AB, 223 69 Lund (SE)
(72) Inventor: Ardö, Björn, 223 69 LUND (SE); Nyström, Johan, 223 69 LUND (SE); Edpalm, Viktor, 223 69 LUND (SE); Yuan, Song, 223 69 LUND (SE); Förberg, Johan, 223 69 LUND (SE)
(74) Representative: AWA Sweden AB

(57) **Abstract**

The present disclosure relates to a systems, methods and non-transitory computer-readable media for transforming raw image data into a video stream comprising a plurality of encoded image frames. To reduce memory bandwidth and power consumption, compression rates of sets of imaging data temporarily stored in memory during the transformation of raw image data into the video stream are adapted based on encoding configurations, on a pixel block level.

## Description

### Technical Field

The present invention relates generally to the field of image processing systems, and more particularly, to systems, methods, and non-transitory computer-readable media for optimizing memory bandwidth in a system for transforming raw image data into a video stream comprising a plurality of encoded image frames.

### Background

In the field of image processing, high-resolution cameras with high frames per second (FPS) and/or high dynamic range (HDR) image capturing functionality are becoming increasingly prominent. These advanced camera systems typically demand superior performance and energy efficiency. However, managing the large throughput of pixel data necessitated by these systems remains a considerable challenge.

Many steps in a media processing pipeline (transforming raw image data into an encoded video stream) in such cameras are unable to take advantage of direct first-in, first-out (FIFO) memory access and instead must resort to an additional memory access pass. This extra step tends to significantly increase the memory bandwidth requirement, thereby reducing throughput and subsequently causing power consumption inefficiencies.

To mitigate this, some systems in the prior art have employed various compression components. Imaging data is compressed before being written into memory and then decompressed after it is read from the memory. While this method can reduce the amount of data passing to and from the memory, thereby reducing the memory bandwidth, it introduces its own challenges. For example, it can be difficult to determine the optimal rate of compression. Some of these compression methods use lossy compression, which may lead to a degradation in image quality, presenting a trade-off between image quality and memory bandwidth efficiency.

Furthermore, these camera systems may require a system-on-chip (SOC) and product design that can meet the maximum available memory bandwidth according to a target price. The actual memory bandwidth consumed not only affects performance but also impacts power consumption. A camera chip designed without considering power efficiency may consume substantial power, which is particularly problematic for battery-powered devices.

Thus, there exists a need for a more efficient method of managing memory bandwidth in a system for transforming raw image data into a video stream, such that the system can deliver high performance while reducing power consumption.

There is thus a need for improvements in this context.

### Summary

In view of the above, solving or at least reducing one or several of the drawbacks discussed above would be beneficial, as set forth in the attached independent patent claims.

According to a first aspect of the present invention, there is provided a system for transforming raw image data into a video stream comprising a plurality of encoded image frames, the system comprising: an image sensor configured to continuously capture raw image data; an image signal processor, ISP, configured to process the raw image data into a plurality of processed image frames; a video encoder configured to encode the processed image frames into the video stream comprising the plurality of encoded image frames; a memory configured to temporarily store sets of imaging data during the transformation of raw image data into the video stream, each set of imaging data comprising one of: raw image data, partially processed raw image data, or at least a portion of a processed image frame, wherein the sets of imaging data comprising a first set of imaging data; and a memory bandwidth compressor configured to compress the first set of imaging data when being written to the memory and decompress the first set of imaging data when being read from the memory;

The system further comprises an encoding analyser configured to associate the first set of imaging data with encoding parameters, wherein the encoding parameters comprises at least one of: first data indicating that the video encoder will disregard the first set of imaging data, or data derived therefrom, when encoding the video stream; or second data indicating a quantization parameter, QP, that will be used by the video encoder when encoding the first set of imaging data, or data derived therefrom, as a block of pixels in an encoded image frame of the plurality of encoded image frames; wherein the memory bandwidth compressor is configured to compress the first set of imaging data based on the encoding parameters associated with the first set of imaging data.

The system comprises a plurality of components involved in transforming of raw image data (captured by the image sensor, capturing the raw visual information from the surroundings) the into the encoded video stream. The ISP (may also be referred to as an image data refiner, image adjustment unit, visual data processor, etc) refine the raw image data into a more usable format by improving quality, adjusting for various factors, or preparing the image for subsequent processes. The video encoder (may also be referred to as video compression unit, image stream encoder, visual data compressor, etc) used the processed image frames from the ISP and turns them into a compressed video stream. It helps in reducing the amount of data necessary to represent the video of the surroundings (the captured scene) while maintaining as much quality as possible. During transforming of the raw image data into the encoded video stream, the memory (may also be referred to as data buffer, storage buffer, imaging cache, temporary data storage) temporarily holds various kinds of imaging data as it moves through the system. This might include the initial raw data, parts of the processed frames, or any other intermediate format that may result from the processing conducted by the ISP.

The term "partly processed raw image data" should, in the context of present specification, be interpreted as intermediate data that is required to be stored in memory during the process of the raw image data into a plurality of processed image frames as performed by the ISP. For example, a sub-set of the raw image data may be converted to a full colour data by the demosaicing functionality of the ISP and temporarily stored in memory before continued processing (such as applying noise reduction, dynamic range compression, etc.) is performed. The full colour version of the sub-set of raw image data is thus an example of the "partly processed raw image data".

Given that imaging data may be vast in size, the memory bandwidth compressor (may also be referred to as data compression unit, storage efficiency enhancer, buffer compression system, etc.) is used to compress data when storing it and then decompresses it when it is time to retrieve it from the memory. This can increase efficiency as described above. To facilitate the increased efficiency, the encoding analyser helps enhance the encoding process. The encoding analyser links the imaging data with suitable encoding parameters and facilitates that the memory bandwidth compressor uses the right parameters to compress the imaging data. The memory bandwidth compressor thus gets guidance from the encoding analyser. The components of the system may collectively be referred to as the media processing pipeline.

The inventors have realized that the compression rate when storing temporary data to the memory may be based on the encoding configuration which in turn may improve memory bandwidth efficiency, power efficiency and/or image quality of the encoded video stream. As a result, the compression efficiency during intermediate stages (requiring temporarily storage of sets of imaging data in the memory) of the media processing pipeline can be improved, resulting in minimal additional information loss during the intermediate stages compared to the information loss that anyway will occur in the final encoding step.

For example, by early in the media processing pipeline analysing properties of imaging data depicting the captured scene, such as motion and the characteristics of information in the imaging data, it may be possible for the encoding analyser to determine or predict a quantization parameter, QP, that will be used by the video encoder when encoding the first set of imaging data, or data derived therefrom, as a block of pixels (e.g., on a macroblock level, coding tree unit level, coding unit level, etc. depending on the used encoding technology) in an encoded image frame of the plurality of encoded image frames. The determined or predicted QP value may then be used to adapt compression rates of the internal compressions applied in the intermediate steps by the memory bandwidth compressor on macroblock/CTU/CU level.

Alternatively, or additionally, the encoding analyser may determine that the video encoder will disregard a set of imaging data, or data derived therefrom, when encoding the video stream. For example, the encoding analyser may determine that a part of a captured scene is static, which means that some imaging data may remain the same or very similar from image frame to image frame, making it advantageous to use skip block encoding. In these situations, the video encoder may disregard a set of imaging data, or data derived therefrom, when encoding the video stream, since the video encoder may already have all the pixel information in a reference frame and no new data needs to be loaded. Advantageously, compression rates of the internal compressions applied in the intermediate steps by the memory bandwidth compressor on the disregarded imaging data may be adapted accordingly. As will be described further below, other situations may occur, such as applying privacy masks, picture in picture, text overlays, etc., to the encoded video, when the encoder may disregard some imaging data, or data derived therefrom, when encoding the video stream.

To summarize, the encoding analyser is thus configured to associate at least some sets of imaging data with encoding parameters as described above. The encoding parameters comprises at least one of: first data indicating that the video encoder will disregard the first set of imaging data, or data derived therefrom, when encoding the video stream; or second data indicating a quantization parameter, QP, that will be used by the video encoder when encoding the first set of imaging data, or data derived therefrom. The memory bandwidth compressor is configured to compress a specific set of imaging data based on the encoding parameters associated with that set of imaging data, which in turn may improve memory bandwidth efficiency, power efficiency and/or image quality of the encoded video stream.

In some embodiments, upon the first set of imaging data being associated with encoding parameters comprising the first data, the memory bandwidth compressor is configured to encode the first set of imaging data using a single colour value, the single colour value being one of: a predetermined colour, or an average colour determined from the set of imaging data. A predetermined colour may be a low complexity way to flag the associated imaging data as a "skip block" or similar such that this information may propagate through processes implemented by the components of the media processing pipeline. Using an average colour may be advantageous for certain of these processes, i.e., to maintain some of the colour information of the first set of imaging data throughout the media processing pipeline. For example, in the case of implementing a pixelated privacy mask, pixels of each block (e.g., 32x32 or 64x64 pixels) are replaced by the average colour of the corresponding block.

In examples, upon the first set of imaging data being associated with encoding parameters comprising the second data, the memory bandwidth compressor is configured to encode the first set of imaging data using the QP indicated by the second data. Consequently, the compression rates of the internal compressions applied in the intermediate steps in the imaging pipeline may be adapted according to the encoding configurations used by the video encoder when encoding the first set of imaging data, or data derived therefrom. By quantizing the data stored in the intermediate steps (in the memory) with a same granularity (using the same QP) as the quantization used by the video encoder, the information loss in the intermediate steps would anyway occur in the final encoding step, which in turn may result in an improved efficiency of the intermediate storage without reducing image quality of the video stream comprising the plurality of encoded image frames outputted by the video encoder.

In some examples, the ISP comprises a temporal noise reduction stage configured to determine a motion estimate value for the first set of imaging data, wherein the encoding analyser is configured to associate encoding parameters for the first set of imaging data based on the motion estimate value. Advantageously, using a built-in function of (the temporal noise reduction stage) the ISP and the data derived therefrom as input data for the decision made by the encoding analyser, the additional complexity resulting from the adaptive compression of the intermediate memory storage as described herein may be reduced. For example, a low motion estimate value for a specific set of imaging data may result in encoding of that imaging data (or data derived therefrom) using a skip block or a high QP value.

In some embodiments, the encoding analyser is configured to, upon determining that the motion estimate value is less than a first motion threshold, associate the first set of imaging data with encoding parameters comprising the first data, wherein the video encoder encodes the first set of imaging data, or data derived therefrom, as a skip block in an encoded image frame of the plurality of encoded image frames.

In examples, the encoding analyser is configured to, upon determining that the motion estimate value is equal to or exceeding the first motion threshold, associate the first set of imaging data with encoding parameters comprising the second data, wherein a value of the QP indicated by the second data increases with a decreasing motion estimate value.

The motion threshold may be configured based on quality requirements of the encoded video, for example depending on the captured scene or the subsequent use of the encoded video.

In some embodiments, the system further comprises an overlay applier configured to apply an overlay to a portion of a processed image frame of the plurality of processed image frames, wherein the encoding analyser further configured to, upon determining that the portion of the processed image frame is derived from the first set of image data, associate the first set of imaging data with encoding parameters comprising the first data. The overlay applier may thus be configured to place or superimpose an overlay (like a watermark, graphic, text, etc.) onto certain portion(s) of the imaging data such that the imaging data covered by the overlay will be hidden. The encoding analyser may take advantage of such knowledge to increase compression of set(s) of imaging data which corresponds to such portion(s) of the imaging data for the intermediate storage. For example, if a set of the imaging data later will be completely covered by an overlay, the encoding analyser may treat this set of imaging data as a skip block and associate the set of imaging data with encoding parameters indicating that the video encoder will disregard the first set of imaging data, or data derived therefrom, when encoding the video stream.

In other examples, the overlay applier may thus be configured to place or superimpose an overlay onto certain portion(s) of the imaging data such that the imaging data covered by the overlay will be less visible in the encoded video stream, The set of imaging data may thus be blurred by an overlay, e.g., by a privacy filter, or a partly transparent overlay, and the encoding analyser may treat this set of imaging data as being encoded with a high QP and associate the set of imaging data with encoding parameters accordingly. Consequently, in some examples, the system further comprises comprising an overlay applier configured to apply an overlay to a portion of a processed image frame of the plurality of processed image frames, wherein the encoding analyser further configured to, upon determining that the portion of the processed image frame is derived from the first set of image data, associate the first set of imaging data with encoding parameters comprising the second data, wherein a value of the QP indicated by the second data is set to a predetermined value. The predetermined value may depend on the specific overlay that is applied, such that a privacy filter results in a first predetermined value and a partly transparent logotype results in a second predetermined value.

In some examples, when encoding parameters for a set of imaging data is determined based on knowledge of a position of an overlay, such a decision of encoding parameters may be taken already at a very early stage of the imaging pipeline, i.e., directly when the raw image data is being captured, since no analysis of the captured image data is required to determine the encoding parameters. In such examples, the first set of imaging data (being associated with the encoding parameters) comprises raw image data. Advantageously, all storage of such raw imaging data, or data derived therefrom, needed in the media processing pipeline may be adapted accordingly resulting in a reduced memory bandwidth and/or increased power consumption throughout the entire media processing pipeline.

In some embodiments, the system comprises a camera chip comprising the image sensor, ISP and video encoder, wherein the memory is provided external to the camera chip. Integrating large amounts of memory directly onto a chip can be expensive. External memory components, for example Dynamic Random Access Memory, DRAM, have been mass-produced for a long time and can be more cost-effective in certain applications. However, several complexities may arise due to the external read/write operations to the memory. Reading from and writing to external memory usually takes longer than accessing on-chip or integrated memory. This added latency can affect real-time processing needs, especially in high-resolution or high-frame-rate applications. Moreover, the data bandwidth between the camera chip and the external memory might be limited. As mentioned above, high-resolution video streams may require high bandwidth, and any bottleneck can lead to reduced performance. Furthermore, accessing external memory often consumes more power than accessing on-chip memory, primarily because of the longer distances and the larger drivers needed for off-chip communication. Implementing compression techniques described herein may reduce the implications of some/all of these complexities.

In some embodiments, the system comprises a camera chip comprising the image sensor, ISP, video encoder, and the memory, wherein the memory is a Static Random Access Memory, SRAM. If an internal SRAM is used, this typically is more expensive per bit and uses a larger footprint for the same memory capacity compared to DRAM. Consequently, it may be important to implement efficient memory compression techniques to reduce cost and size of the camera chip.

In some embodiments, the memory bandwidth compressor is configured to compress the first set of imaging data further based on a memory bandwidth of the memory. Consequently, harder compression than indicated by the encoding analyser may be used by the memory bandwidth compressor if needed to meet current memory bandwidth limitations.

According to a second aspect of the invention, the above object is achieved by a method for transforming raw image data into a video stream comprising a plurality of encoded image frames, the method comprising the steps of: continuously capturing raw image data; processing the raw image data into a plurality of processed image frames; encoding the processed image frames into the video stream comprising the plurality of encoded image frames; temporarily storing sets of imaging data during the transformation of raw image data into the video stream, each set of imaging data comprising one of: raw image data, partially processed raw image data, or at least a portion of a processed image frame, wherein the sets of imaging data comprising a first set of imaging data; associating the first set of imaging data with encoding parameters, the encoding parameters comprises at least one of: first data indicating that the video encoder will disregard the first set of imaging data, or data derived therefrom, when encoding the video stream; or second data indicating a quantization parameter, QP, that will be used by the video encoder when encoding the first set of imaging data, or data derived therefrom, as a block of pixels in an encoded image frame of the plurality of encoded image frames; and compressing the first set of imaging data when being written to the memory and decompress the first set of imaging data when being read from the memory, wherein compressing the first set of imaging data being based on the encoding parameters associated with the first set of imaging data.

According to a third aspect of the invention, the above object is achieved by one or more non-transitory computer-readable media storing instructions executable by one or more processors, wherein the instructions, when executed, cause the one or more processors to perform operations comprising: continuously capturing raw image data; processing the raw image data into a plurality of processed image frames; encoding the processed image frames into the video stream comprising the plurality of encoded image frames; temporarily storing sets of imaging data during the transformation of raw image data into the video stream, each set of imaging data comprising one of: raw image data, partially processed raw image data, or at least a portion of a processed image frame, wherein the sets of imaging data comprising a first set of imaging data; associating the first set of imaging data with encoding parameters, the encoding parameters comprises at least one of: first data indicating that the video encoder will disregard the first set of imaging data, or data derived therefrom, when encoding the video stream; or second data indicating a quantization parameter, QP, that will be used by the video encoder when encoding the first set of imaging data, or data derived therefrom, as a block of pixels in an encoded image frame of the plurality of encoded image frames; and compressing the first set of imaging data when being written to the memory and decompress the first set of imaging data when being read from the memory, wherein compressing the first set of imaging data being based on the encoding parameters associated with the first set of imaging data.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows how a memory reads and writes in a system for transforming raw image data into an encoded video stream according to embodiments;
Figure 2 shows a system for transforming raw image data into an encoded video stream according to embodiments;
Figure 3 shows image compression of blocks of pixels to reduce memory bandwidth according to embodiments;
Figure 4 shows image compression of blocks of pixels covered by an overlay in the encoded video to reduce memory bandwidth according to embodiments;
Figure 5 shows a flow chart of a method for transforming raw image data into an encoded video stream according to embodiments.

### Detailed Description

Within the realm of digital media applications, such as monitoring applications, a comprehensive process encompasses the capture of raw image data, its subsequent transformation into image frames, and the final encoding via prevalent standards such as Moving Picture Experts Group (MPEG)-2, MPEG-4, H.264/Advanced Video Coding (AVC), and the more recent high-efficiency video coding (HEVC) encoders. As the appetite for high definition (HD) and ultra-HD content grows, these systems must handle an extensive volume of data, right from raw image acquisition to encoding, within tight time constraints. For these multifaceted operations, off-chip dynamic random access memory (DRAM) is conventionally employed as the foundational and reference frame memory, aiming for a harmonious blend of system cost and performance. However, the comprehensive processing of raw image data to pre-encoded frames entails intensive memory access, amplifying the inherent challenges. Frequent accesses to pixels in DRAM, essential for both processing and encoding stages, lead to substantial bandwidth demands and elevated power consumption, thereby challenging the architecture of real-time HD video processing systems. Even when considering local static random access memory (SRAM), typically favoured for its swift access capabilities, bandwidth bottlenecks can arise, especially when extensive data processing is required for raw image data transformation. Addressing these compounded memory bandwidth issues is of utmost importance.

Building on the complexities of capturing, processing, and encoding visual data, the inherent nature of encoding itself should be considered. At its core, the encoding process is designed to remove certain details from captured images. These are details that, although captured by the imaging sensor, are deemed non-essential for the final display or transmission. The rationale behind this is twofold: firstly, to achieve efficient compression rates, and secondly, to align with human visual perception wherein not all captured details are discernible or necessary for the viewer. In light of this, from a system design and memory management perspective, it may be advantageous that these extraneous details/frequencies, which will eventually be discarded or reduced during encoding, need not be stored throughout the media processing pipeline. By identifying and bypassing the storage of such unnecessary information early in the process, systems can achieve significant savings in memory bandwidth and storage requirements. This approach not only streamlines the data flow but also potentially reduces power consumption and augments the overall efficiency of the image-to-encoding pathway. The present application relates to techniques to achieve such an approach.

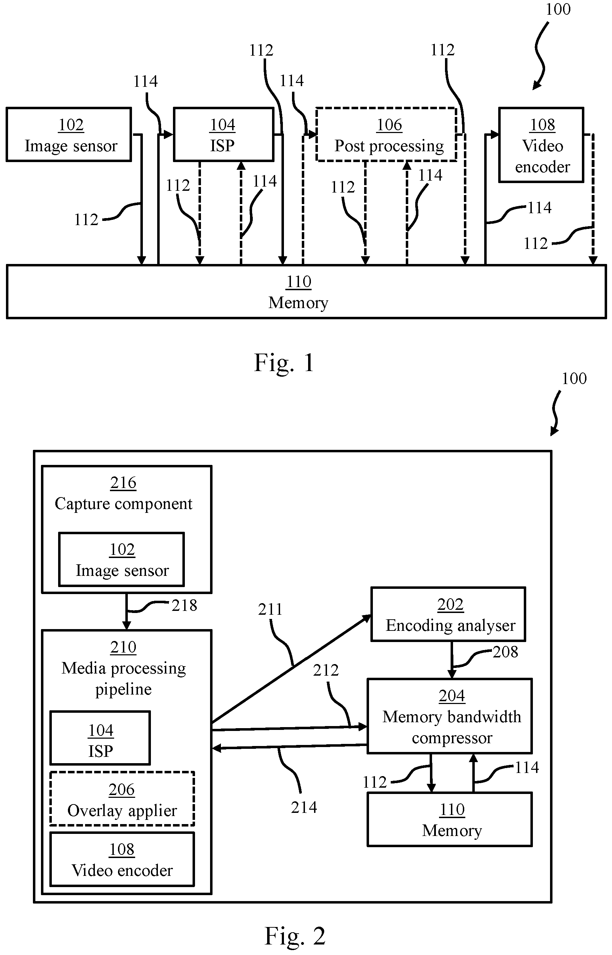

Figure 1 shows a system 100 configured to processing imaging data and transforming raw image data into a video stream comprising a plurality of encoded image frames. Figure 1 further shows how such a system may use a memory 110 for intermediate storage of imaging data during the processing. The system 100 comprises an image sensor 102 configured to continuously capture raw image data. The system 100 further comprises an image signal processor, ISP, 104 configured to process the raw image data into a plurality of processed image frames. The ISP 104 may for example implement functionality such as demosaicing or colour filter array (CFA) interpolation which converts raw sensor data, which usually captures one colour per pixel (either red, green, or blue), into a full-colour image. Other functionality that may be implemented by the ISP includes white balance adjustment, colour correction, gamma correction, noise reduction (temporal and spatial), sharpening, dynamic range compression or expansion, HDR processing, edge enhancement, face detection or other object detection, motion detection, etc.

The system 100 may in some examples include a post processing component 106 that makes further adjustments or additions to the processed image frames, such as adding overlays to the processed image frames, scaling or rotation of the processed image frames etc.

The system 100 further comprises a video encoder 108 configured to encode the processed image frames into the video stream comprising the plurality of encoded image frames. The video encoder 108 implements a codec, for example any one of the ones discussed above, or any other suitable video codec such as AV1.

The ISP 104, the post processing component 106 (if implemented) and the video encoder 108 may collectively be referred to as a media processing pipeline which processes the raw image data and outputs an encoded video stream. The image sensor 102 is part of a capture component of the system. The capture component may further comprise elements such as an analog-to-digital converter (ADC) that transforms the analogy signal from the image sensor into a digital signal that can be processed by the media processing pipeline. The capture component may comprise further elements such as image stabilization, auto focus systems, etc. The elements of the capture component function in concert to perceive, focus, and record the light from the scene, transforming it into a raw digital signal that will be further processed by the media processing pipeline.

During the transforming of the raw image data into a video stream comprising a plurality of encoded image frames, a memory 110 is used to temporarily store sets of imaging data. The imaging data stored in the memory 110 may comprise raw image data from the image sensor 102 (e.g., as transformed by the ADC into digital data). It should be noted that in reality it may not be the capture component per se that is responsible for storing 112 the raw image data in the memory 110, but a specific hardware block (not shown in figure 1) implemented in the system 100.

The imaging data stored in the memory 110 may comprise partially processed raw image data, i.e., storage necessary while the ISP 104 processes the raw image data into a plurality of processed image frames. The imaging data stored in the memory 110 may comprise at least a portion of a processed image frame, i.e., output from the ISP 104 and/or storage implemented during or after the post processing stage 106. In some cases, also the encoded video is stored in the memory 110.

Imaging data may thus be written 112 to the memory 110 at one or several occasions during the processing performed by the media processing pipeline. For example, the output (raw image data) from the image sensor 102, the output (portions of processed image frames) from the ISP 104, and/or the output (portions of post processed image frames) from the post processing component 106 may be written 112 to the memory. from the image sensor 102 may be stored 112 in the memory 110. Moreover, partially processed raw image data may be written 112 to the memory, i.e., storage necessary while the ISP 104 processes the raw image data into a plurality of processed image frames.

Similarly, imaging data may be read 114 from the memory at one or several occasions during the processing performed by the media processing pipeline, corresponding to the writing operations 112 described above.

Figure 2 shows a schematic overview of a system 100 for transforming raw image data into an encoded video stream according to embodiments. The system 100 comprises a capture component 216 including the image sensor 102. The capture component sends the raw image data 218 to the media processing pipeline 210. The system 100 thus comprises the media processing pipeline 210 shown in figure 1, i.e., including the ISP 104, the post processing component 106 (if implemented) represented by an overlay applier 206 in figure 2, and the video encoder 108. The system 100 further comprises the memory 110 configured to temporarily store sets of imaging data.

Figure 2 further shows components used for adaptive compression of the imaging data before being written 112 to the memory 110, wherein the adaptive compression is implemented using the techniques described herein. The imaging data written to the memory 110 may be referred to as sets of imaging data comprising a first set of imaging data. Each set of imaging data may correspond to a coding unit of the codec implemented by the video encoder 108. For some codecs, a size of such set may vary (e.g., HEVC) while for other codecs, the size of such set may be static (e.g., H.264).

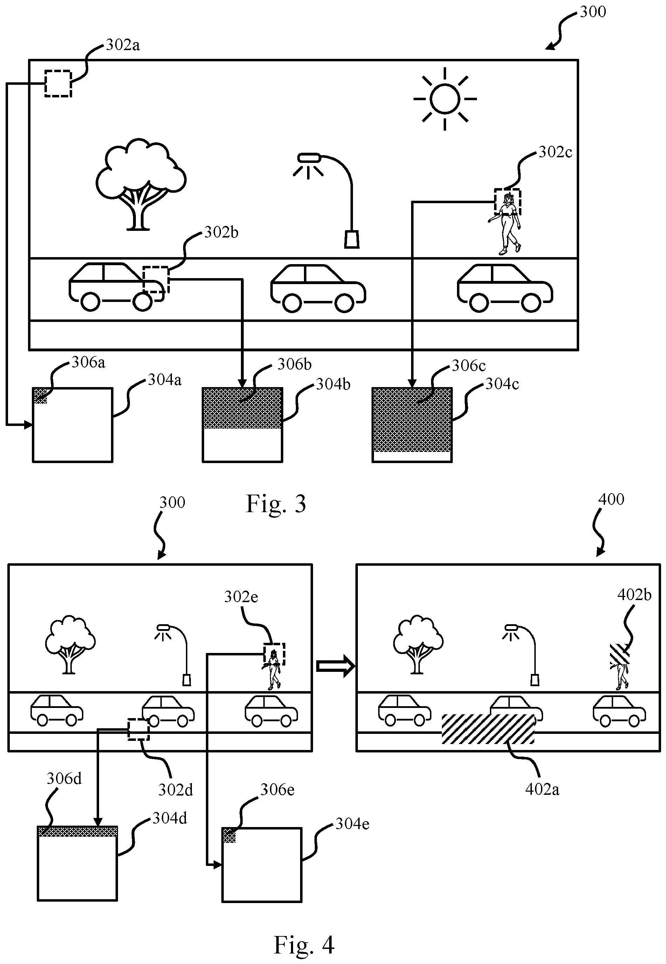

The first set of imaging data may be used herein to exemplify the functionality of the system, for ease of description. To achieve adaptive compression, the system 100 further comprises an encoding analyser 202 configured to associate the first set of imaging data 212 with encoding parameters 208. The encoding analyser determine the encoding parameters based on any suitable encoding metadata (may also be referred to as encoding directives, encoder hints, etc.) 211 received from the media processing pipeline (from one or more components thereof). Such data 211 may comprise motion estimates, object detection data, overlay position data, etc, received from one or more components of the media processing pipeline 210 as will be further described below in conjunction with figures 3-4.

Moreover, the system 100 comprises a memory bandwidth compressor 204 configured to compress the first set of imaging data 212 when being written 112 to the memory 110 and decompress the first set of imaging data (into decompressed imaging data 214) when being read 114 from the memory 110. The first set of imaging data is associated with the encoding parameters 208 determined by the encoding analyser 202. In the example of figure 2, such encoding parameters 208 are received by the memory bandwidth compressor 204 directly from the encoding analyser 202 and may be associated with the first set of imaging data 212 using e.g., an index of the first set of imaging data 212 or similar techniques. In other embodiments, such encoding parameters 208 are stored in the memory 110 along with the set of imaging data it is associated with, and the memory bandwidth compressor 204 may extract the encoding parameters from the memory 110.

The media processing pipeline 210 (any of the components 104, 206, 108 therein, as well as a component (not shown) responsible for storing the raw image data 218 received from the capturing component 216 into memory 110) may thus transmit the first set of imaging data 212 to the memory bandwidth compressor 204 for compression (according to the associated encoding parameters 208) and to write 112 the compressed version of the first set of imaging data 212 in the memory 110. The memory bandwidth compressor 204 is further configured to decompress the first set of imaging data when being read 114 from the memory 110 and facilitate the decompressed version 214 of the first set of imaging data to the imaging pipeline 210 (any of the components 104, 206, 108 therein) when requested.

As described above, the encoding parameters 208 may comprise at least one of first data indicating that the video encoder 108 will disregard the first set of imaging data, or data derived therefrom, when encoding the video stream; or second data indicating a quantization parameter, QP, that will be used by the video encoder 108 when encoding the first set of imaging data, or data derived therefrom, as a block of pixels in an encoded image frame of the plurality of encoded image frames. Figure 3 exemplifies situations when the first and second data may be determined, and possible outcomes of the compression of sets of imaging data.

Figure 3 shows an image frame 300 depicting a scene comprising static portions and portions comprising motion by objects of different types. The image frame 300 shows a scene comprising a street with cars. A pedestrian walks along the street. The scene further comprises a semi static area (represented by a tree) and a static area (the ground behind the street, a streetlight, and a clear sky).

Figure 3 further shows three sets 302a-c (identified as first, second and third in the description of figure 3) of imaging data from the image frame 300. A first set 302a comprising imaging data depicting the static sky of the scene. A second set 302b comprises imaging data depicting a moving car. A third set 302c comprises imaging data depicting the upper part of the walking pedestrian.

For each of the three sets 302a-c, encoding metadata is determined which may guide the encoding analyser, e.g., the encoding analyser 202 in figure 2, when determining encoding parameters for each of the three sets. For example, the encoding metadata may include a motion estimate value for the three sets 302a-c. The motion estimate values may be determined by a temporal noise reduction stage comprised in the ISP. The motion estimate value may in other embodiments be determined using any other suitable component or algorithm implemented in the media processing pipeline.

The encoding analyser may be configured to associate encoding parameters to each of the three sets 302a-c based on the motion estimate value. For example, the first set 302a of imaging data may be associated with a motion estimate value that is low, since it depicts a static area of the scene. The encoding analyser may be configured to, upon determining that the motion estimate value of the set 302a of imaging data currently being processed is less than a first motion threshold, associate that set 302a of imaging data with encoding parameters indicating that the video encoder will disregard that set 302a of imaging data, or data derived therefrom, when encoding the video stream. In other words, the encoding analyser may determine that the first set 302a of imaging data probably will be encoded as a skip block. Using this knowledge, the memory bandwidth compressor, e.g., the memory bandwidth compressor 204 in figure 2, may be configured to encode the first set 302a of imaging data using a single colour value. In figure 3, the encoded version 304a of the first set 302a shows this embodiment. The information of the first set 302a of imaging data is in the encoded version 304a represented by one value 306a, which may be a single colour value. The single colour value 306a may be one of a predetermined colour, or an average colour determined from the first set 302a of imaging data.

Turning now to the processing of the second set 302b of imaging data. The second set 302b of imaging data may be associated with a motion estimate value that is higher than the motion estimate value of the first set 302a of imaging data, since it depicts a non-static area of the scene (i.e., depicting a moving car). In some embodiments, the encoding analyser is configured to, upon determining that the motion estimate value is equal to or exceeding the first motion threshold, associate the set 302b of imaging data currently being processed with encoding parameters indicating a quantization parameter, QP, that will be used by the video encoder when encoding the set 302b of imaging data currently being processed, or data derived therefrom, as a block of pixels in an encoded image frame of the plurality of encoded image frames. In some embodiments, a value of the QP indicated by the encoding parameters increases with a decreasing motion estimate value. A higher QP value results in a higher compression rate. The memory bandwidth compressor may then be configured to encode the set 302b of imaging data currently being processed using the QP indicated by the encoding parameters associated with the set 302b of imaging data currently being processed. In the example of figure 3, the information of the second set 302b of imaging data is in the encoded version 304b represented by a quantized data 306b which corresponds to a 40% compression rate.

Turning now to the processing of the third set 302c of imaging data. The third set 302c of imaging data may be associated with a motion estimate value that is higher than the motion estimate value of the first set 302a of imaging data, but lower than the motion estimate value of the second set 302b of imaging data. This would indicate a higher compression rate compared to the second set 302b of imaging data. However, the encoding analyser may be configured to take other parameters than the motion estimate value into account when determining the encoding parameters of the set 302c of imaging data currently being processed. For example, the encoding metadata may comprise object detection data, indicating an object type depicted by the set 302c of imaging data currently being processed. Depending on the application of the techniques described herein, different object types may be considered more important than other object types, when it comes to maintaining visual details of the object in the encoded video. For example, for face recognition purposes, it may be important to maintain visual details of human faces in the encoded video. Consequently, in the example of figure 3, an encoding analyser configured to associate the set 302c of imaging data currently being processed with encoding parameters indicating a low QP value, resulting in a low compression rate. In the example of figure 3, the information of the third set 302c of imaging data is in the encoded version 304c represented by a quantized data 306b which corresponds to a 10% compression rate.

As understood from above, the encoding metadata, guiding the encoding analyser when determining encoding parameters for a set if imaging data may comprise other types of information, depending on the application of the techniques described herein. Figure 4 shows such an example.

In some embodiments, as shown in figure 2, the system 100 may comprise an overlay applier 206 configured to apply an overlay to a portion of a processed image frame of the plurality of processed image frames. In figure 4, this embodiment is shown by two image frames 300, 400. The left image frame 300 corresponds to the image frame 300 of figure 3. The right image frame 400 corresponds to the left image frame 300 onto which two overlays 402a-b have been applied. The first overlay 402a is intended to represent a semi-transparent overlay, for example a text-overlay showing a time stamp of the capturing time of the left image frame 300. The second overlay 402b is intended to represent a non-transparent privacy filter preventing identification of the pedestrian in the scene. Figure 4 further shows two sets 302d-e (referred to as fourth and fifth, continuing the counting from image 3) of imaging data from the image frame 300. The fourth set 302d comprising imaging data that will be covered by the first overlay 402a. The fifth set 302e comprises imaging data that will be covered by the second overlay 402b.

In this embodiment, the encoding analyser may receive information as to position and type of the overlays 402a-b. Such information may be received early in the imaging pipeline, for example already at the raw image data stage. Advantageously, the encoding analyser may initiate removal of unnecessary information from the imaging data early in the imaging pipeline, which reduces memory bandwidth and power consumption.

The encoding analyser may be further configured to determine that the portion of the processed image which is covered any of the overlays 402a-b frame is derived from the set of imaging data currently being processed. In this case, the encoding analyser may determine if the information of the set of imaging data currently being processed will be completely hidden by the overlay (as the case with the non-transparent overlay 402b) or just partly hidden/blurred (as the case with the semi-transparent overlay 402a).

Turning to the processing of the fourth set 302d of imaging data. For the fourth set 302d of imaging data, the encoding analyser may determine that the information may be partly hidden/blurred, which means that the encoding analyser may associate the set 302d of imaging data currently being processed with encoding parameters indicating a quantization parameter, QP, that will be used by the video encoder when encoding the set 302d of imaging data currently being processed, or data derived therefrom, as a block of pixels in an encoded image frame of the plurality of encoded image frames. In some embodiments, the value of the QP indicated by encoding parameters is set to a predetermined value. In other embodiments, the transparency of the overlay 402a may determine the QP, such that a higher transparency results in a lower QP. The memory bandwidth compressor may then be configured to encode the set 302d of imaging data currently being processed using the QP indicated by the encoding parameters associated with the set 302d of imaging data currently being processed. In the example of figure 4, the information of the fourth set 302d of imaging data is in the encoded version 304d represented by a quantized data 306d which corresponds to a 90% compression rate.

Turning to the processing of the fifth set 302e of imaging data. For the fifth set 302e of imaging data, the encoding analyser may determine that the information may be completely hidden, which means that the encoding analyser may associate the set 302e of imaging data currently being processed with encoding parameters indicating the video encoder will disregard the first set of imaging data, or data derived therefrom, when encoding the video stream. Using this knowledge, the memory bandwidth compressor, e.g., the memory bandwidth compressor 204 in figure 2, may be configured to encode the set 302e of imaging data currently being processed using a single colour value. The encoded version 304e of the fifth set 302e shows this embodiment. The information of the fifth set 302e of imaging data is in the encoded version 304e represented by one value 306e, which may be a single colour value. The single colour value 306e may be one of a predetermined colour, or an average colour determined from the fifth set 302e of imaging data.

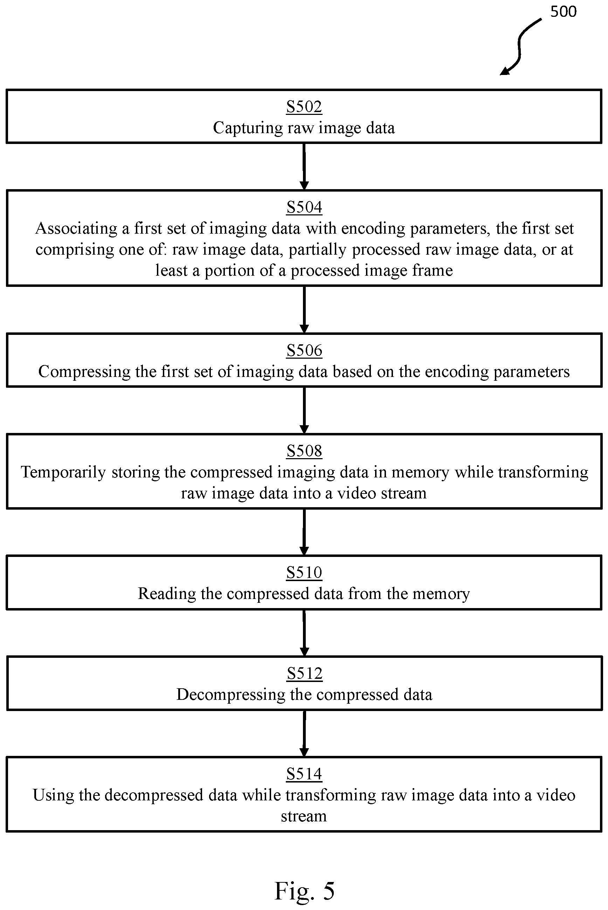

Figure 5 shows a flow chart of a method 500 for transforming raw image data raw image data into a video stream comprising a plurality of encoded image frames according to embodiments.

The method 500 comprises the step of continuously capturing S502 raw image data. The raw image data may be processed into a plurality of processed image frames, which are encoding into the video stream comprising the plurality of encoded image frames as described above.

The process of transforming raw image data into a video stream comprising a plurality of encoded image frames includes associating S504 a first set of imaging data with encoding parameters. The first set of imaging data comprising one of: raw image data, partially processed raw image data, or at least a portion of a processed image frame. The encoding parameters comprises at least one of first data indicating that the video encoder will disregard the first set of imaging data, or data derived therefrom, when encoding the video stream; or second data indicating a QP, that will be used by the video encoder when encoding the first set of imaging data, or data derived therefrom, as a block of pixels in an encoded image frame of the plurality of encoded image frames.

The method 500 further comprises temporarily storing S508 sets of imaging data during the transformation of raw image data into the video stream. Before storing S508 a set of imaging data, the set of imaging data is compressed S506 based on the encoding parameters associated with the set of imaging data. When compressed data is read S510 from the memory, the compressed data is decompressed S512. The decompressed data is then used in a subsequent step of the process of transforming raw image data into a video stream comprising a plurality of encoded image frames.

The method 500 and other embodiments of the functionality described herein may be implemented as instructions stored by one or more non-transitory computer-readable media executable by one or more processors. The system 100 of figures 2-3 may be implemented by a single device such as a camera. Generally, the device implementing the system 100 may comprise circuitry which is configured to implement the components of the system 100 and, more specifically, their functionality. The described features in the system 100 can be implemented advantageously in one or more computer programs that are executable on a programmable system including at least one programmable processor. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. For example, the memory bandwidth compressor may be configured to compress a set of imaging data further based on a memory bandwidth of the memory, resulting in a larger compression rate for a set if imaging data than instructed by the encoding analyser. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system (100) for transforming raw image data into a video stream comprising a plurality of encoded image frames, the system comprising:
an image sensor (102) configured to continuously capture raw image data;
an image signal processor, ISP, (104) configured to process the raw image data into a plurality of processed image frames;
a video encoder (108) configured to encode the processed image frames into the video stream comprising the plurality of encoded image frames;
a memory (110) configured to temporarily store sets of imaging data during the transformation of raw image data into the video stream, each set of imaging data comprising one of: raw image data, partially processed raw image data, or at least a portion of a processed image frame, wherein the sets of imaging data comprising a first set of imaging data;
a memory bandwidth compressor (204) configured to compress the first set of imaging data when being written to the memory and decompress the first set of imaging data when being read from the memory;
the system further comprising an encoding analyser (202) configured to associate the first set of imaging data with encoding parameters, wherein the encoding parameters comprises at least one of:
first data indicating that the video encoder will disregard the first set of imaging data, or data derived therefrom, when encoding the video stream; or
second data indicating a quantization parameter, QP, that will be used by the video encoder when encoding the first set of imaging data, or data derived therefrom, as a block of pixels in an encoded image frame of the plurality of encoded image frames;
wherein the memory bandwidth compressor is configured to compress the first set of imaging data based on the encoding parameters associated with the first set of imaging data.

2. The system of claim 1, wherein, upon the first set of imaging data being associated with encoding parameters comprising the first data, the memory bandwidth compressor is configured to encode the first set of imaging data using a single colour value, the single colour value being one of:
a predetermined colour, or
an average colour determined from the first set of imaging data.

3. The system of claim 1, wherein, upon the first set of imaging data being associated with encoding parameters comprising the second data, the memory bandwidth compressor is configured to encode the first set of imaging data using the QP indicated by the second data.

4. The system of any one of claims 1-3, wherein the ISP comprises a temporal noise reduction stage configured to determine a motion estimate value for the first set of imaging data, wherein the encoding analyser is configured to associate encoding parameters for the first set of imaging data based on the motion estimate value.

5. The system of claim 4, wherein the encoding analyser is configured to, upon determining that the motion estimate value is less than a first motion threshold, associate the first set of imaging data with encoding parameters comprising the first data, wherein the video encoder encodes the first set of imaging data, or data derived therefrom, as a skip block in an encoded image frame of the plurality of encoded image frames.

6. The system of claim 5, wherein the encoding analyser is configured to, upon determining that the motion estimate value is equal to or exceeding the first motion threshold, associate the first set of imaging data with encoding parameters comprising the second data, wherein a value of the QP indicated by the second data increases with a decreasing motion estimate value.

7. The system of any one of claims 1-6, further comprising an overlay applier (206) configured to apply an overlay to a portion of a processed image frame of the plurality of processed image frames, wherein the encoding analyser further configured to, upon determining that the portion of the processed image frame is derived from the first set of image data, associate the first set of imaging data with encoding parameters comprising the first data.

8. The system of any one of claims 1-6, further comprising an overlay applier configured to apply an overlay to a portion of a processed image frame of the plurality of processed image frames, wherein the encoding analyser further configured to, upon determining that the portion of the processed image frame is derived from the first set of image data, associate the first set of imaging data with encoding parameters comprising the second data, wherein a value of the QP indicated by the second data is set to a predetermined value.

9. The system of any one of claims 7-8, wherein the first set of imaging data comprises raw image data.

10. The system of any one of claims 1-9, comprising a camera chip comprising the image sensor, ISP and video encoder, wherein the memory is provided external to the camera chip.

11. The system of claim 10, wherein the memory is a Dynamic Random Access Memory, DRAM.

12. The system of any one of claims 1-9, comprising a camera chip comprising the image sensor, ISP, video encoder, and the memory, wherein the memory is a Static Random Access Memory, SRAM.

13. The system of any one of claims 1-12, wherein the memory bandwidth compressor is configured to compress the first set of imaging data further based on a memory bandwidth of the memory.

14. A method for transforming raw image data into a video stream comprising a plurality of encoded image frames, the method comprising the steps of:
continuously capturing raw image data;
processing the raw image data into a plurality of processed image frames;
encoding the processed image frames into the video stream comprising the plurality of encoded image frames;
temporarily storing sets of imaging data during the transformation of raw image data into the video stream, each set of imaging data comprising one of: raw image data, partially processed raw image data, or at least a portion of a processed image frame, wherein the sets of imaging data comprising a first set of imaging data;
associating the first set of imaging data with encoding parameters, the encoding parameters comprises at least one of:
first data indicating that the video encoder will disregard the first set of imaging data, or data derived therefrom, when encoding the video stream; or
second data indicating a quantization parameter, QP, that will be used by the video encoder when encoding the first set of imaging data, or data derived therefrom, as a block of pixels in an encoded image frame of the plurality of encoded image frames; and
compressing the first set of imaging data when being written to the memory and decompress the first set of imaging data when being read from the memory, wherein compressing the first set of imaging data being based on the encoding parameters associated with the first set of imaging data.

15. One or more non-transitory computer-readable media storing instructions executable by one or more processors, wherein the instructions, when executed, cause the one or more processors to perform operations comprising:
continuously capturing raw image data;
processing the raw image data into a plurality of processed image frames;
encoding the processed image frames into the video stream comprising the plurality of encoded image frames;
temporarily storing sets of imaging data during the transformation of raw image data into the video stream, each set of imaging data comprising one of: raw image data, partially processed raw image data, or at least a portion of a processed image frame, wherein the sets of imaging data comprising a first set of imaging data;
associating the first set of imaging data with encoding parameters, the encoding parameters comprises at least one of:
first data indicating that the video encoder will disregard the first set of imaging data, or data derived therefrom, when encoding the video stream; or
second data indicating a quantization parameter, QP, that will be used by the video encoder when encoding the first set of imaging data, or data derived therefrom, as a block of pixels in an encoded image frame of the plurality of encoded image frames; and
compressing the first set of imaging data when being written to the memory and decompress the first set of imaging data when being read from the memory, wherein compressing the first set of imaging data being based on the encoding parameters associated with the first set of imaging data.

## Amended claims

### Amended claims in accordance with Rule 137(2) EPC.

1. A system (100) for transforming raw image data into a video stream comprising a plurality of encoded image frames, the system comprising:
an image sensor (102) configured to continuously capture raw image data;
an image signal processor, ISP, (104) configured to process the raw image data into a plurality of processed image frames;
a video encoder (108) configured to encode the processed image frames into the video stream comprising the plurality of encoded image frames;
a memory (110) configured to temporarily store sets of imaging data during the transformation of raw image data into the video stream, each set of imaging data comprising one of: raw image data, partially processed raw image data, or at least a portion of a processed image frame, wherein the sets of imaging data comprising a first set of imaging data;
a motion estimator configured to determine a motion estimate value for the first set of imaging data;
a memory bandwidth compressor (204) configured to compress the first set of imaging data when being written to the memory and decompress the first set of imaging data when being read from the memory;
the system further comprising an encoding analyser (202) configured to associate the first set of imaging data with encoding parameters, wherein the encoding parameters comprises one of:
first data indicating that the video encoder will disregard the first set of imaging data, or data derived therefrom, when encoding the video stream; or
second data indicating a quantization parameter, QP, that will be used by the video encoder when encoding the first set of imaging data, or data derived therefrom, as a block of pixels in an encoded image frame of the plurality of encoded image frames;
wherein, upon the first set of imaging data being associated with encoding parameters comprising the first data, the memory bandwidth compressor is configured to encode the first set of imaging data using a single colour value, the single colour value being one of:
a predetermined colour, or
an average colour determined from the first set of imaging data;
and wherein, upon the first set of imaging data being associated with encoding parameters comprising the second data, the memory bandwidth compressor is configured to encode the first set of imaging data using the QP indicated by the second data;
wherein the encoding analyser is configured to receive the motion estimate value from the motion estimator;
wherein the encoding analyser is configured to, upon determining that the motion estimate value is less than a first motion threshold, associate the first set of imaging data with encoding parameters comprising the first data, wherein the video encoder encodes the first set of imaging data, or data derived therefrom, as a skip block in an encoded image frame of the plurality of encoded image frames; and
wherein the encoding analyser is configured to, upon determining that the motion estimate value is equal to or exceeding the first motion threshold, associate the first set of imaging data with encoding parameters comprising the second data, wherein a value of the QP indicated by the second data increases with a decreasing motion estimate value.

2. The system of claim 1, wherein the ISP comprises a temporal noise reduction stage, wherein the temporal noise reduction stage comprises the motion estimator.

3. The system of any one of claims 1-2, wherein the first set of imaging data comprises raw image data.

4. The system of any one of claims 1-3, comprising a camera chip comprising the image sensor, ISP and video encoder, wherein the memory is provided external to the camera chip.

5. The system of claim 4, wherein the memory is a Dynamic Random Access Memory, DRAM.

6. The system of any one of claims 1-5, comprising a camera chip comprising the image sensor, ISP, video encoder, and the memory, wherein the memory is a Static Random Access Memory, SRAM.

7. The system of any one of claims 1-6, wherein the memory bandwidth compressor is configured to compress the first set of imaging data further based on a memory bandwidth of the memory.

8. A method for transforming raw image data into a video stream comprising a plurality of encoded image frames, the method comprising the steps of:
continuously capturing raw image data;
processing the raw image data into a plurality of processed image frames;
encoding the processed image frames into the video stream comprising the plurality of encoded image frames;
temporarily storing sets of imaging data during the transformation of raw image data into the video stream, each set of imaging data comprising one of: raw image data, partially processed raw image data, or at least a portion of a processed image frame, wherein the sets of imaging data comprising a first set of imaging data;
determining a motion estimate value for the first set of imaging data;
associating the first set of imaging data with encoding parameters, the encoding parameters comprises one of:
first data indicating that the video encoder will disregard the first set of imaging data, or data derived therefrom, when encoding the video stream; or
second data indicating a quantization parameter, QP, that will be used by the video encoder when encoding the first set of imaging data, or data derived therefrom, as a block of pixels in an encoded image frame of the plurality of encoded image frames;
wherein, upon determining that the motion estimate value is less than a first motion threshold, associating the first set of imaging data with encoding parameters comprises associating the first set of imaging data with encoding parameters comprising the first data, wherein the first set of imaging data, or data derived therefrom, is encoded as a skip block in an encoded image frame of the plurality of encoded image frames, and
wherein, upon determining that the motion estimate value is equal to or exceeding the first motion threshold, associating the first set of imaging data with encoding parameters comprises associating the first set of imaging data with encoding parameters comprising the second data, wherein a value of the QP indicated by the second data increases with a decreasing motion estimate value;
wherein the method further comprises: compressing the first set of imaging data when being written to the memory and decompress the first set of imaging data when being read from the memory, wherein compressing the first set of imaging data comprises:
upon the first set of imaging data being associated with encoding parameters comprising the first data, encoding the first set of imaging data using a single colour value, the single colour value being one of:
a predetermined colour, or
an average colour determined from the first set of imaging data;
and upon the first set of imaging data being associated with encoding parameters comprising the second data, encoding the first set of imaging data using the QP indicated by the second data.

9. One or more non-transitory computer-readable media storing instructions executable by one or more processors, wherein the instructions, when executed, cause the one or more processors to perform operations comprising:
continuously capturing raw image data;
processing the raw image data into a plurality of processed image frames;
encoding the processed image frames into the video stream comprising the plurality of encoded image frames;
temporarily storing sets of imaging data during the transformation of raw image data into the video stream, each set of imaging data comprising one of: raw image data, partially processed raw image data, or at least a portion of a processed image frame, wherein the sets of imaging data comprising a first set of imaging data;
determining a motion estimate value for the first set of imaging data;
associating the first set of imaging data with encoding parameters, the encoding parameters comprises one of:
first data indicating that the video encoder will disregard the first set of imaging data, or data derived therefrom, when encoding the video stream; or
second data indicating a quantization parameter, QP, that will be used by the video encoder when encoding the first set of imaging data, or data derived therefrom, as a block of pixels in an encoded image frame of the plurality of encoded image frames; and
wherein, upon determining that the motion estimate value is less than a first motion threshold, associating the first set of imaging data with encoding parameters comprises associating the first set of imaging data with encoding parameters comprising the first data, wherein the first set of imaging data, or data derived therefrom, is encoded as a skip block in an encoded image frame of the plurality of encoded image frames, and
wherein, upon determining that the motion estimate value is equal to or exceeding the first motion threshold, associating the first set of imaging data with encoding parameters comprises associating the first set of imaging data with encoding parameters comprising the second data, wherein a value of the QP indicated by the second data increases with a decreasing motion estimate value;
wherein the method further comprises: compressing the first set of imaging data when being written to the memory and decompress the first set of imaging data when being read from the memory, wherein compressing the first set of imaging data comprises:
upon the first set of imaging data being associated with encoding parameters comprising the first data, encoding the first set of imaging data using a single colour value, the single colour value being one of:
a predetermined colour, or
an average colour determined from the first set of imaging data;
and upon the first set of imaging data being associated with encoding parameters comprising the second data, encoding the first set of imaging data using the QP indicated by the second data.
